# EUROPÄISCHE PATENTSCHRIFT

(11) **EP 1 899 604 B1**
(45) Veröffentlichungstag und Bekanntmachung des Hinweises auf die Patenterteilung: **15.10.2008**
(21) Anmeldenummer: 05813331.5
(22) Anmeldetag: 17.11.2005
(51) Int. Cl.: F04B 27/10, F04B 49/12

(54) **AXIALKOLBENMASCHINE**
AXIAL PISTON MACHINE
MACHINE A PISTONS AXIAUX

(30) Priorität: 25.11.2004 DE 102004056851
(43) Veröffentlichungstag der Anmeldung: 19.03.2008
(73) Patentinhaber: ixetic MAC GmbH, 61352 Bad Homburg (DE)
(72) Erfinder: HINRICHS, Jan, 61381 Friedrichsdorf (DE)
(86) Internationale Anmeldenummer: PCT/DE2005/002062
(87) Internationale Veröffentlichungsnummer: WO 2006/056167

(56) Entgegenhaltungen:
- EP-A- 0 990 795
- DE-U- 6 935 759
- US-A- 4 428 718
- US-A- 5 094 590
- US-A- 5 368 450
- US-B1- 6 368 070

## Beschreibung

Die Erfindung betrifft eine Axialkolbenmaschine, insbesondere einen Klimakompressor für Kraftfahrzeuge, mit einem Triebwerk, welches durch eine Welle drehangetrieben wird und in welchem die Drehbewegung über einen Schwenkring oder eine Schwenkscheibe oder eine Schrägscheibe oder gleich wirkende Getriebeeinrichtung in eine Hin- und Herbewegung von Kolben, welche Druckmittel ansaugen und verdichten, umgewandelt wird, wobei die Welle unter anderem in einem vorderen ersten Axiallager gelagert ist.

Derartige Axialkolbenmaschinen sind bekannt. Dabei können diese Maschinen den Nachteil aufweisen, dass im drucklosen Zustand oder bei niedrigen Gehäusedrücken und hohen axialen Beschleunigungen die Welle vom vorderen Axiallager abheben kann.

Weiterhin sind Axialkolbenmaschinen bekannt, die ein zweites, hinteres axiales Wälzlager am entgegengesetzten Ende der Welle aufweisen. Das zweite axiale Wälzlager führt zur Anhebung der Teilekosten und der Herstellkosten einer derartigen Maschine und muss auch noch eine entsprechende Einstellbarkeit aufweisen.

Eine Axialkolbenmaschine mit den Merkmalen des Oberbegriffs des Patentanspruchs 1 ist aus dem US Patent 5,094,590 bekannt.

Es ist daher Aufgabe der Erfindung, eine Axialkolbenmaschine darzustellen, die diese Nachteile nicht aufweist.

Die Aufgabe wird gelöst durch eine Axialkolbenmaschine, wie sie vom Gegenstand des Patentanspruchs 1 definiert ist.

Weiterhin wird eine Axialkolbenmaschine bevorzugt, bei der eine Axialfixierungs- und -lagervorrichtung als Kunststoffformteil ausgebildet ist, insbesondere aus dem Werkstoff PA 6.6.

Ebenso wird eine Axialkolbenmaschine bevorzugt, bei welcher die Axialfixierungs- und -lagervorrichtung radial außerhalb der Anlagefläche F2 eine kegelstumpfförmige, dünnwandige Mantelfläche F4 aufweist, welche radial in einer Ausnehmung des Zylinderblocks oder des Zylinderkopfes oder der Ventilplattenvorrichtung anliegt.

Eine erfindungsgemäße Axialkolbenmaschine zeichnet sich dadurch aus, dass das Kunststoffformteil einen geringen, gewollt zugelassenen Verschleiß erfährt, durch bewusst genutztes elastisches und plastisches Verhalten mit berücksichtigtem Kriechverhalten, der das Kunststoffformteil axial auf seine Einbaulänge einstellt. Das hat den Vorteil, dass die Benutzung des erfindungsgemäßen Kunststoffformteiles gegenüber bekannten Axiallagern keine Einstellarbeiten benötigt. Generell hat die Erfindung den Vorteil, dass das einstückige Axialfixierungs- und -lagervorrichtungselement sowohl ein zweites Axiallager als auch eine federnde Anpressvorrichtung und eine Schwingungsdämpfung in axialer Richtung ersetzen.

Weiterhin wird eine Axialkolbenmaschine bevorzugt, bei welcher die Axialfixierungs- und -lagervorrichtung als Transportsicherung dient. Das hat den Vorteil, dass im drucklosen und betriebslosen Zustand die Welle gegen axiale Verschiebungen durch Stöße gesichert ist und das Kunststoffformteil einem Abheben vom vorderen Axiallager sowohl im betriebslosen Zustand als auch im Betrieb entgegen wirkt.

Die Erfindung wird nun anhand der Figuren beschrieben.

Figur 1 zeigt einen Querschnitt durch einen Teil einer Axialkolbenmaschine mit der eingebauten Axialfixierungs- und -lagervorrichtung.

Figur 2 zeigt in mehreren dreidimensionalen Darstellungen die Axialfixierungs- und -lagervorrichtung.

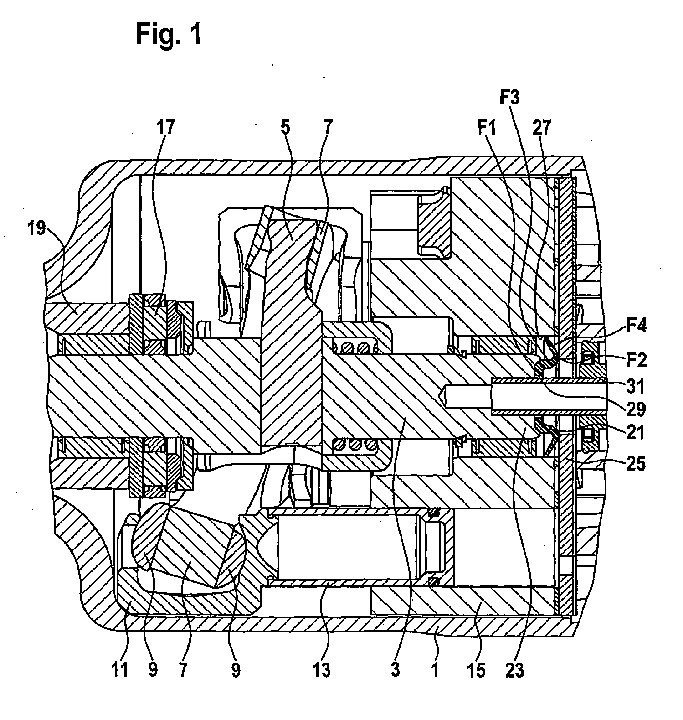

In Figur 1 ist innerhalb eines Kompressorgehäuses 1 eine Antriebswelle 3 angeordnet, welche bei einer Drehbewegung einen Mitnehmerstift 5 in Rotation versetzt, welcher wiederum einen so genannten Schwenkring 7 in Rotation versetzt. Der Schwenkring 7 kann dabei in dieser Maschine verschiedene Winkelstellungen einnehmen und somit das Hubvolumen des Kompressors verändern. Auf dem rotierenden Schwenkring 7 gleiten Gleitschuhe 9, welche innerhalb eines Kolbenumgriffs 11 eines Kolbens 13 angeordnet sind. Die Kolbenschuhe 9 führen im Umgriff 11 des Kolbens 13 taumelnde Bewegungen durch, wobei die Drehbewegung des Schwenkrings 7 in eine Hubbewegung der Kolben 13 umgesetzt wird. Die Kolben 13 laufen wiederum in einem Zylinderblock 15 hin und her und saugen dabei ein Kältemittel an, verdichten es und stoßen es in den Hochdruckbereich einer Klimaanlage aus. Da die Kolben 13 bei dieser Ansaug- und Verdichtungsarbeit entsprechende axiale Kräfte in den Schwenkring 7 und damit in die Welle 3 einleiten, müssen diese Axialkräfte über ein Axiallager 17 im vorderen Wellenbereich aufgefangen werden. In den meisten Betriebsarten wirken die Axialkräfte derartig, dass das Axiallager 17 immer durch die in der Welle auftretenden Axialkräfte gegen den Gehäuseteil 19 gepresst wird. Allerdings kann im drucklosen Zustand des Betriebs oder bei niedrigen Gehäusedrücken und hohen axialen Beschleunigungen der Kolben 13 die Welle 3 vom Lager 17 abheben. Daher wird erfindungsgemäß ein Kunststoffformteil 21, also die so genannte Axialfixierungs- und -lagervorrichtung, zwischen dem zum Axiallager 17 entgegengesetzten Wellenende 23 und einem Gehäuseteil, hier der Ventilplatte 25, angeordnet. Das Kunststoffformteil 21 spannt die Welle gegen das Lager 17 vor und wirkt damit einem Abheben der Welle 3 von dem Lager 17 entgegen. Das Kunststoffformteil 21 ist dabei so ausgelegt, dass sich durch sein elastisches Verhalten und einen geringen, gewollt zugelassenen Verschleiß, der durch plastische Verformung und bewusst genutztes Kriechverhalten auftritt, das Bauteil der axialen Einbauraumlänge zwischen dem Wellenende 23 und der Ventilplattenvorrichtung 25 anpasst. Dabei ist das Kunststoffformteil 21 derartig aufgebaut, dass sich eine axiale etwa kreisringförmige Anlagefläche F1 für das Wellenende 23 ergibt und eine axiale, sehr schmale kreisringförmige ausgeformte Anlagefläche F2 für die Ventilplattenvorrichtung 25, wobei beide Anlagenflächen F1 und F2 durch einen etwa tulpenförmig gebogenen, in axialer Richtung federnden Ringteil F3 miteinander verbunden sind. Dieser gebogene, federnde Ringteil F3 erzeugt durch die Federkraft des Elastomerwerkstoffs, der z. B. Gummi, Kunststoff oder eine Mischung aus beiden sein kann, die axiale Anpresskraft für die Welle 3 gegen das vordere Axiallager 17. Ausgehend von der Auflagefläche F2 an der Ventilplatte wird das Kunststoffformteil 21 radial nach außen durch eine kegelstumpfförmige, dünnwandige Mantelfläche F4 fortgeführt, welche radial in einer Ausnehmung 27 des Zylinderblocks 15 anliegt. Dadurch ist auch die radiale Zentrierung des Formteils 21 gegeben, so dass das Formteil 21 an seiner zentralen Öffnung 29 genügend Spiel gegenüber einem Welleneinsatz 31 haben kann und dort keine Reibungskräfte bei der Rotation erzeugt werden. Das erfindungsgemäße Kunststoffformteil 21 bietet dabei den Vorteil, dass am hinteren Wellenende 23 kein zweites Axiallager und keine zusätzliche federnde Anpressvorrichtung angeordnet sein muss, wie es im Stand der Technik der Fall ist. Das Kunststoffformteil 21 erfüllt also damit beide Funktionen, die einer axialen Fixierung durch Erzeugen einer Axialkraft und die eines axialen Lagers. Dabei ist die Ausführung als Kunststoffformteil 21 ausgesprochen einfach und preiswert darzustellen.

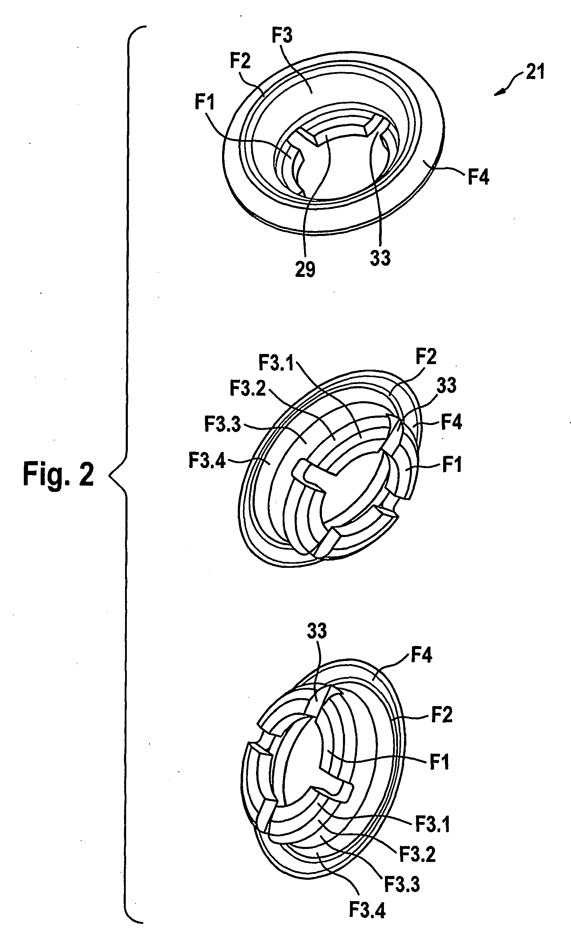

In Figur 2 ist eine Variante des Kunststoffformteils, also der Axialfixierungs- und Lagervorrichtung 21, dreidimensional in drei Ansichten dargestellt. Die axiale kreisringförmige Anlagefläche F1 für die Welle 3 bzw. das Wellenende 23 aus Figur 1 ist hier im Bereich der zentralen Öffnung 29 durch vier Einstiche 33 unterbrochen, so dass sich Taschen für einen Schmierstoffdurchlass und damit auch Schmiernuten ergeben.

Die Auflagefläche F2, welche an der Ventilplatte 25 in Figur 1 anliegt, ist hier eine schmale kreisringförmige Fläche F2, wie im Querschnitt in Figur 1 dargestellt.

An der Fläche tritt damit ein geringerer, gewollt zugelassener Verschleiß zur Anpassung an die axiale Einbauraumlänge des Kunststoffformteils 21 auf. Die axiale Federkraft wird hier durch eine etwa kegelstumpförmige Zwischenfläche F3 aufgebracht, welche die beiden Anlageflächen F1 und F2 miteinander verbindet. Der relativ dünnwandige vierte Bund F4, also die kegelstumpfförmige Ringfläche, stellt dann die Zentrierung in der Ausnehmung 27 des Zylinderkopfes 15 aus Figur 1 her. Die in etwa tulpenförmige Umfangsfläche F3, wie sie in Figur 1 dargestellt ist, kann auch durch eine gestufte Anordnung der Flächen F3.1, F3.2, F3.3. und F3.4 realisiert werden, wie in der mittleren und unteren Abbildung in Figur 2 ersichtlich. Wichtig ist nur, dass der bogenförmige bzw. schräge Verlauf für eine entsprechende Federungsbewegung und Federungswirkung ausgelegt wird.

Die Vorteile der Erfindung sind somit in der axialen Festlegung der Kompressorwelle 3, einer Kostenreduktion durch Vermeidung eines zweiten Axiallagers, durch Vermeidung von Einstellarbeiten wie bei einem zweiten Axiallager und zu guter letzt daher auch durch eine Montagevereinfachung zu sehen.

### Bezugszeichenliste

- 1: Kompressorgehäuse
- 3: Antriebswelle
- 5: Mitnehmerstift
- 7: Schwenkring
- 9: Gleitschuhe
- 11: Kolbenumgriff
- 13: Kolben
- 15: Zylinderblock
- 17: Axiallager
- 19: Gehäuseteil
- 21: Kunststoffformteil
- 23: Wellenende
- 25: Ventilplatte
- F1: axiale kreisringförmige Anlagefläche
- F2: kegelig ausgeformte Anlagefläche
- F3: federnder Ringteil
- F4: kegelstumpfförmige dünnwandige Mantelfläche
- 27: Ausnehmung des Zylinderblocks 15
- 29: zentrale Öffnung des Formteils 21
- 31: Welleneinsatz
- 33: Einstiche

## Patentansprüche

1. Axialkolbenmaschine, insbesondere Klimakompressor für Kraftfahrzeuge, mit einem Triebwerk, welches durch eine Welle (3) drehangetrieben wird und die Drehbewegung über eine Schrägscheibe oder eine Schwenkscheibe oder einen Schwenkring (7) oder gleich wirkende Getriebeeinrichtungen in eine Hin- und Herbewegung von Kolben (13), welche Druckmittel ansaugen und verdichten, umgewandelt wird, wobei die Welle (3) unter anderem in einem vorderen ersten Axiallager (17) gelagert ist, und auf die Welle (3) im Bereich des zum vorderen Axiallager (17) entgegengesetzten, hinteren Endes (23) eine elastische, federnde, einstückige Axialfixierungs- und -lagervorrichtung (21) einwirkt, welche die Welle (3) gegen das vordere, erste Axiallager (17) vorspannt, **dadurch gekennzeichnet, dass** die Axialfixierungs- und -lagervorrichtung (21) eine axiale kreisringförmige Anlagefläche F1 für die Welle (3) und eine weitere axiale kreisringförmige Anlagefläche F2 für ein Gehäusebauteil, wie eine Ventilplattenvorrichtung (25) oder einen Zylinderblock oder einen Zylinderkopf aufweist, wobei die Anlageflächen F1 und F2 durch eine etwa tulpenförmig gebogene, in axialer Richtung federnde Ringfläche F3 miteinander verbunden sind.

2. Axialkolbenmaschine nach Anspruch 1, **dadurch gekennzeichnet, dass** die Axialfixierungs- und -lagervorrichtung (21) als Kunststoffformteil ausgebildet ist, insbesondere aus dem Werkstoff PA 6.6.

3. Axialkolbenmaschine nach Anspruch 1 oder Anspruch 2, **dadurch gekennzeichnet, dass** die Axialfixierungs- und -lagervorrichtung (21) radial außerhalb der axialen kreisringförmigen Anlagefläche F2 eine kegelstumpfförmige, dünnwandige Mantelfläche F4 aufweist, welche radial in einer Ausnehmung des Zylinderblocks (15) oder Zylinderkopfs oder der Ventilplattenvorrichtung anliegt.

4. Axialkolbenmaschine nach einem der vorhergehenden Ansprüche, **dadurch gekennzeichnet, dass** das Kunststoffformteil (21) einen geringeren, gewollt zugelassenen Verschleiß erfährt, der das Kunststoffbauteil (21) auf die axiale Einbaulänge einstellt.

5. Axialkolbenmaschine nach einem der vorhergehenden Ansprüche, **dadurch gekennzeichnet, dass** die Axialfixierungs- und -lagervorrichtung (21) als Transportsicherung dient.

## Claims

1. Axial piston machine, in particular an air conditioning compressor for motor vehicles, having a driving mechanism which is rotary-driven by a shaft (3), and the rotary motion is converted by means of an oblique plate or swivel plate or swivel ring (7) or equivalently operating transmission devices into a back-and-forth motion of pistons (13) which draw in and compress pressurizing agent, where the shaft (3) is supported in part in a front first axial bearing (17), and acting on the shaft (3) in the area of the rear end (23) positioned opposite the front axial bearing (17) is an elastic, springy, single-piece axial fixing and supporting device (21) which pre-tensions the shaft (3) against the front first axial bearing (17), **characterized in that** the axial fixing and supporting device (21) has an axial ring-shaped contact surface F1 for the shaft (3) and another axial ring-shaped contact surface F2 for a housing component, such as a valve disk device (25) or cylinder block or cylinder head, contact surfaces F1 and F2 being joined with each other by a ring surface F3 bent approximately in a tulip shape, which flexes in the axial direction.

2. Axial piston machine according to Claim 1, **characterized in that** the axial fixing and supporting device (21) is designed as a molded plastic part, in particular made of the material PA 6.6.

3. Axial piston machine according to Claim 1 or Claim 2, **characterized in that** the axial fixing and supporting device (21) has, radially outside of the axial ring-shaped contact surface F2, a thin-walled circumferential surface F4 in the shape of a truncated cone, which fits closely radially in a recess in the cylinder block (15) or cylinder head or valve disk device.

4. Axial piston device according to one of the preceding claims, **characterized in that** the molded plastic part (21) experiences slight intentionally permitted wear, which adjusts the plastic component (21) to the axial installation length.

5. Axial piston device according to one of the preceding claims, **characterized in that** the axial fixing and supporting device (21) serves as a transport restraint.

## Revendications

1. Machine à pistons axiaux, en particulier compresseur de climatisation pour véhicules automobiles, avec un mécanisme d'entraînement qui est entraîné en rotation par un arbre (3) et dont le mouvement de rotation est converti par le biais d'un plateau oscillant ou d'un plateau orientable ou d'un anneau pivotant (7) ou de dispositifs de transmission à action identique en un mouvement de va-et-vient de pistons (13) qui aspirent et compriment un fluide sous pression, l'arbre (3) étant logé entre autres dans un premier palier à charge axiale (17) avant, et sur l'arbre (3) dans la zone de l'extrémité (23) arrière opposée au palier à charge axiale (17) avant agissant un dispositif de fixation et de palier à charge axiale (21) d'un seul tenant, à ressort élastique qui précontraint l'arbre (3) contre le premier palier à charge axiale (17) avant, **caractérisée en ce que** le dispositif de fixation et de palier à charge axiale (21) présente une surface d'appui F1 axiale en forme d'anneau de cercle pour l'arbre (3) et une autre surface d'appui F2 axiale en forme d'anneau de cercle pour un composant de boîtier tel qu'un dispositif de tiroir de soupape (25) ou un bloc-cylindres ou une culasse, les surfaces d'appui F1 et F2 étant reliées entre elles par une surface annulaire F3 à ressort dans le sens axial, pliée à peu près en forme de tulipe.

2. Machine à pistons axiaux selon la revendication 1, **caractérisée en ce que** le dispositif de fixation et de palier à charge axiale (21) est réalisé comme une pièce moulée en matière plastique, en particulier en matière PA 6.6.

3. Machine à pistons axiaux selon la revendication 1 ou 2, **caractérisée en ce que** le dispositif de fixation et de palier à charge axiale (21) présente radialement en dehors de la surface d'appui F2 axiale en forme d'anneau de cercle, une surface enveloppe F4 à paroi mince, tronconique, qui repose radialement dans un évidement du bloc-cylindres (15) ou de la culasse ou du dispositif de tiroir de soupape.

4. Machine à pistons axiaux selon l'une quelconque des revendications précédentes, **caractérisée en ce que** la pièce moulée en matière plastique (21) subit une usure plus faible, autorisée volontairement qui règle le composant en matière plastique (21) à la longueur d'installation axiale.

5. Machine à pistons axiaux selon l'une quelconque des revendications précédentes, **caractérisée en ce que** le dispositif de fixation et de palier à charge axiale (21) sert de blocage pour le transport.
